# EUROPÄISCHE PATENTSCHRIFT

(11) **EP 1 234 729 B1**
(45) Veröffentlichungstag und Bekanntmachung des Hinweises auf die Patenterteilung: **23.04.2008**
(21) Anmeldenummer: 01810184.0
(22) Anmeldetag: 21.02.2001
(51) Int. Cl.: B60R 19/34

(54) **Fahrzeug mit Stossstange und Deformationselement**
Vehicle with a bumper and a deformation element
Véhicule avec pare-choc et élément déformable

(43) Veröffentlichungstag der Anmeldung: 28.08.2002
(73) Patentinhaber: Alcan Technology & Management AG, 8212 Neuhausen am Rheinfall (CH)
(72) Erfinder: Simon, Frank, 78250 Tengen (DE)

(56) Entgegenhaltungen:
- EP-A- 0 546 352
- WO-A-98/39197
- JP-A- 11 208 393
- JP-A- 55 136 660
- US-A- 5 876 077
- US-B1- 6 174 009

## Beschreibung

Die Erfindung betrifft ein Fahrzeug mit an diesem über wenigstens ein Deformationselement quer zur Fahrzeuglängsrichtung festgelegter Stossstange, wobei das Deformationselement zwei voneinander beabstandete erste Seitenwände aufweist, die über zwei voneinander beabstandete zweite Seitenwände miteinander verbunden sind, und wobei die ersten und zweiten Seitenwände quer zur Fahrzeuglängsachse verlaufende, paarweise einander gegenüber stehende, je in einer gemeinsamen Ebene liegende erste und zweite Sicken aufweisen.

Zur Befestigung von Stossstangen an einem Fahrzeug ist eine Vielzahl von Halterungen bekannt. Zur Erhöhung des Kompensationsvermögens für die bei einem Aufprall auf die Stossstange auftreffende Verformungsenergie ist es auch bekannt, Stossstangen über Deformationselemente an den Fahrzeuglängsträgern festzulegen.

Bei einem bekannten Deformationselement der eingangs genannten Art sind zwei im wesentlichen etwa U-förmige Teile aus Stahlblech so zu einem geschlossenen Querschnitt gefügt, dass sich die Schenkel der U-förmigen Teile paarweise überlappen und an diesen Überlappungsstellen durch eine Widerstandsschweissung miteinander verbunden sind. Auf allen vier Seitenwänden sind über die gesamte Breite der Seitenwände verlaufende Sicken angeordnet, wobei die erste und zweiten Sicken in den ersten und zweiten Seitenwänden jeweils alle in derselben Ebene liegen.

Das genannte Deformationselement nach dem Stand der Technik zeigt kein ausgesprochen gutes Kompensationsvermögen für die bei einem Aufprall auf die Stossstange auftreffende Verformungsenergie. Ein weiterer Nachteil des vorbekannten Deformationselementes ist die mittige Materialansammlung in den zweiten Seitenwänden, die bei einem Aufprall zu einer stark asymmetrischen, von der allgemeinen Fahrzeuglängsrichtung wegknickenden Verformung des Deformationselementes führt.

Aus der US-A-6 174 009 ist ein Deformationselement mit acht Seitenwänden bekannt. Vier rechtwinklig zueinander angeordnete Hauptseitenwände sind über zwischengeordnete Eckseitenwände, deren Breite etwa der halben Breite der Hauptseitenwände entspricht, zu dem Deformationselement mit achteckigem Querschnitt verbunden. Je eine Sicke auf jeder der Hauptseitenwände, d.h. jeweils vier Sicken, liegen in ersten Ebenen, und je eine Sicke auf jeder der Eckseitenwände, d.h. ebenfalls jeweils vier Sicken, liegen in zwischen jeweils zwei aufeinanderfolgenden ersten Ebenen angeordneten zweiten Ebenen. Alle Sicken erstrecken sich jeweils über die gesamte Breite der Haupt- und Eckseitenwänden.

Der Erfindung liegt die Aufgabe zugrunde, ein Deformationselement der eingangs genannten Art so weiterzubilden, dass das Kompensationsvermögen für die bei einem Aufprall auf die Stossstange auftreffende Verformungsenergie höher ist als bei vergleichbaren Deformationselementen. Zudem soll das Deformationselement kostengünstig und einfach herzustellen sein.

Zur erfindungsgemässen Lösung der Aufgabe führt, dass sich die ersten Sicken über die gesamt Breite der ersten Seitenwände und die zweiten Sicken unter Freilassen eines beidseitigen Randabstandes nur über einen mittleren Teil der zweiten Seitenwände erstrecken, wobei die ersten Sicken paarweise in ersten Ebenen und die zweiten Sicken paarweise in zwischen jeweils zwei aufeinanderfolgenden ersten Ebenen liegenden zweiten Ebenen angeordnet sind.

Die erfindungsgemässe Anordnung der Sicken in den Seitenwänden führt zur Erhöhung des Kompensationsvermögens für die bei einem Aufprall auf die Stossstange auftreffende Verformungsenergie. Durch die zwischen den Ebenen der ersten Sicken in den ersten Seitenwänden angeordneten zweiten Sicken in den zweiten Seitenwänden, die sich im Gegensatz zu den ersten Sicken nicht über die gesamte Breite der Seitenwände erstrecken, wird eine durch die ersten Sicken ausgelöste Verformung durch Verhinderung einer nach innen gerichteten Faltung begrenzt und erst in einer zweiten Stufe unter erneuter Energieaufnahme erfolgt eine weitere Verformung bis zur nachfolgenden Ebene mit weiteren ersten Sicken. Das Verformungsverhalten des erfindungsgemässen Deformationselementes wird weiter dadurch verbessert, dass - im Gegensatz zum eingangs erwähnten Deformationselement nach dem Stand der Technik - die Materialanhäufung nicht in der Mitte von Seitenflächen, sondern im Umfangbereich des kastenartigen Deformationselementes liegt.

Bevorzugt sind die ersten und/oder die zweiten Seitenwände in Fahrzeuglängsrichtung paarweise aufeinander zulaufend geneigt. Dies führt beim Abschleppen des Fahrzeuges bei Kurvenfahrten dazu, dass die Kraftübertragung vom Fahrzeuglängsträger zur Abschleppöse bei einer von der Fahrzeuglängsachse abweichenden Zugrichtung durch eine der beiden ersten Seitenwände verläuft. Andererseits erfolgt die Kraftübertragung bei einem Aufprall mit einem vorgängigen Bremsmanöver, bei dem die Stossstange abgesenkt wird, zu einer Kraftübertragung über eine der zweiten Seitenwände.

Zweckmässigerweise sind die zweiten Seitenwände an ihrem der Stossstange zugewandten Ende über einen quer zur Fahrzeuglängsrichtung verlaufenden Steg miteinander verbunden. Dadurch ergibt sich ein die Herstellung insgesamt vereinfachendes einstückiges Mittelteil.

Der Steg weist bevorzugt eine Öffnung auf und ein an einem den zweiten Seitenwänden und dem Steg innenseitig anliegenden und an den zweiten Seitenwänden und/oder am Steg fixierten Einlegeteil festgelegtes, mit einem Innengewinde zum lösbaren Einschrauben einer Abschleppöse versehenes Rohrstück durchsetzt die Öffnung.

Bevorzugt sind die ersten und/oder die zweiten Seitenwände an ihren der Stossstange entfernten Enden als Flansche zur Bildung einer integralen Befestigungsplatte unter Bildung einer Kante nach aussen abgewinkelt.

Quer zu den durch die Abwinklung gebildeten Kanten können Versteifungssikken verlaufen. Diese verhindern eine allfällige Verformung des Deformationselementes im Bereich der Flansche.

Zweckmässigerweise liegen die zweiten Seitenwände über abgewinkelte Verbindungsstreifen den ersten Seitenwänden innenseitig an und sind mit diesen über die Verbindungsstreifen verbunden.

Bevorzugt sind die ersten Seitenwände an ihrem der Stossstange zugewandten Ende als Befestigungslaschen für die Befestigung der Stossstange ausgebildet.

Um zu verhindern, dass bei einem Aufprall die Verformung des Deformationselementes nicht zuerst im Bereich der Verbindung zum Fahrzeuglängsträger, sondern möglichst nahe bei der Stossstangenauflage eintritt, kann wenigstens ein Paar der in dem der Stossstange entfernt liegenden Bereich der ersten Seitenwände angeordneten ersten Sicken randständig flach gedrückt sein.

Die Stossstange ist bevorzugt ein Profil aus einer Aluminiumlegierung, das Deformationselement ist zweckmässigerweise aus Stahlblech gefertigt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig.1 eine Schrägsicht auf ein Deformationselement mit eingesetzter Stossstange;
- Fig. 2 das Deformationselement von Fig. 1 in vergrösserter Darstellung;
- Fig. 3 die Rückansicht des Deformationselementes von Fig. 2 in Blickrichtung der Fahrzeuglängsrichtung x;
- Fig. 4 eine Seitenansicht des Deformationselementes von Fig. 2 in Blickrichtung A;
- Fig. 5 eine Seitenansicht des Deformationselementes von Fig. 2 in Blickrichtung B.

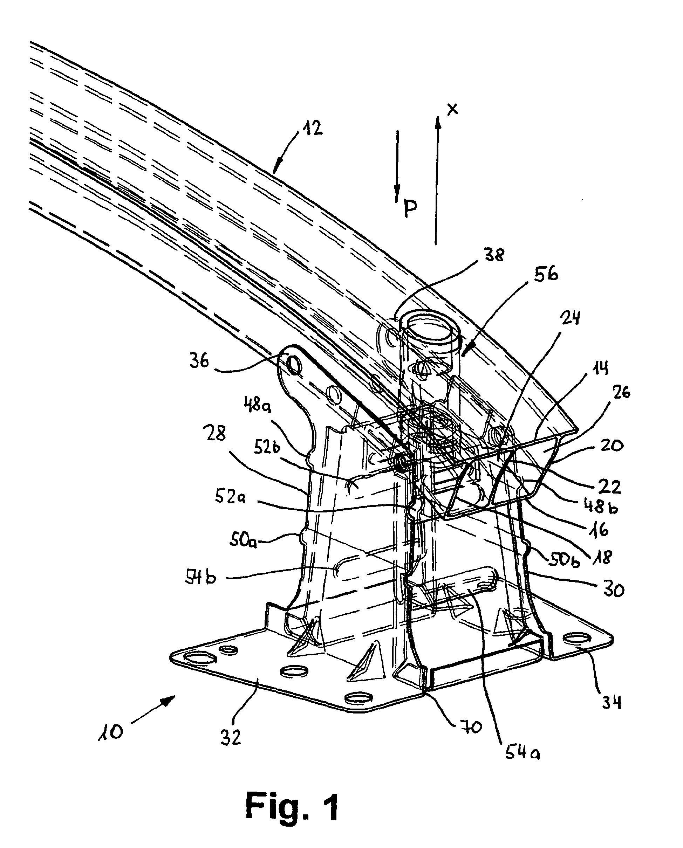

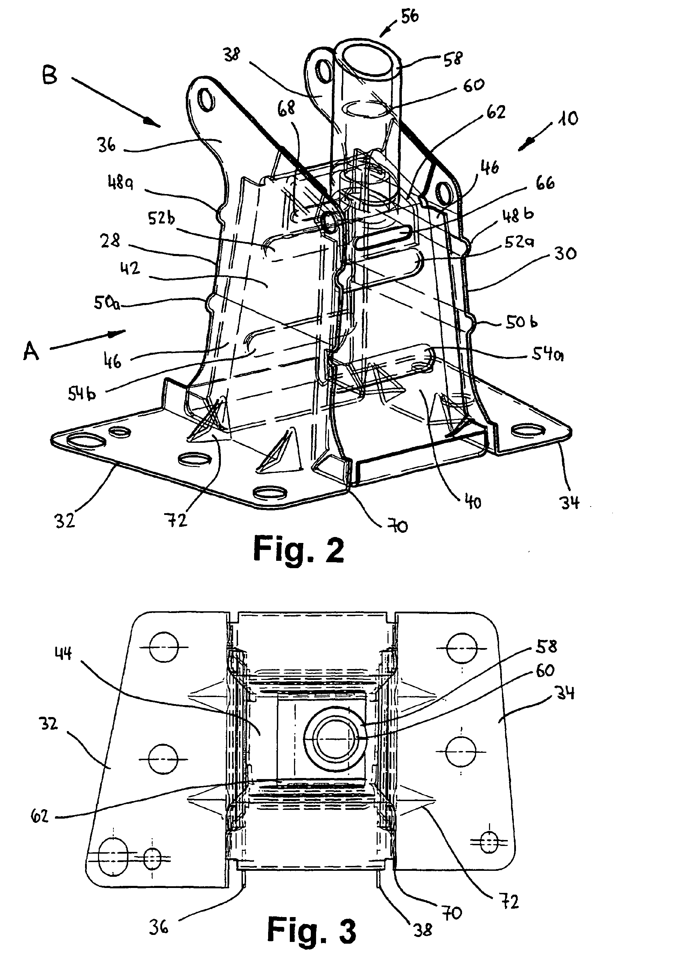

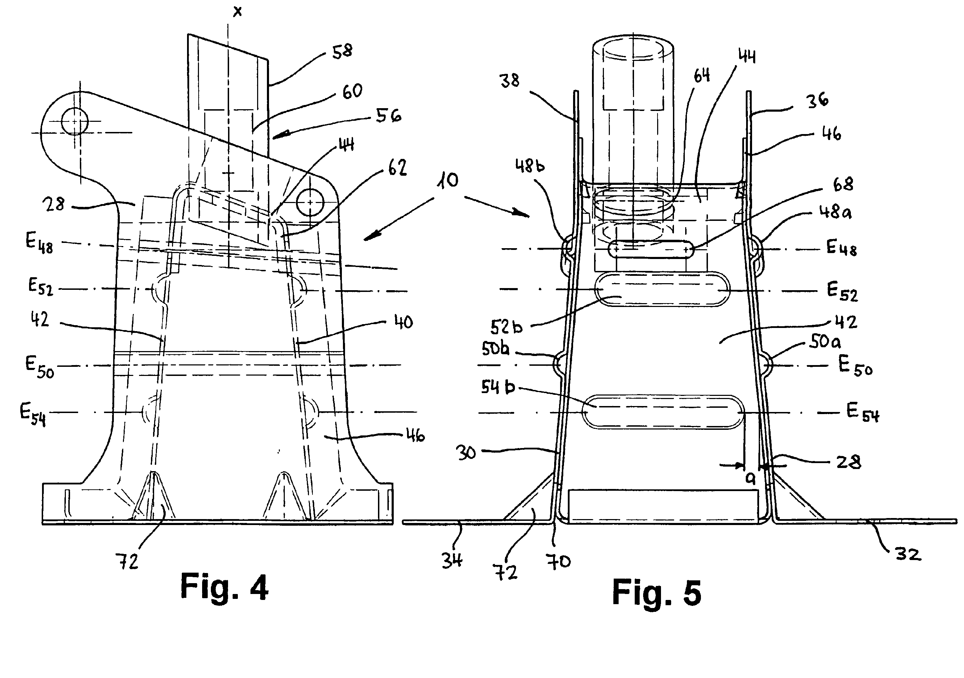

Ein in den Fig. 1 bis 5 wiedergegebenes Deformationselement 10 - auch Crashbox genannt - trägt gemäss Fig. 1 eine Stossstange 12 eines aus Gründen der besseren Übersicht nicht wiedergegebenen Personenkraftwagens. In der Zeichnung ebenfalls nicht gezeigt ist der Fahrzeuglängsträger, an dem das Deformationselement 10 befestigt wird. Die Stossstange 12 ist beispielsweise aus Aluminiumprofil stranggepresst und weist gemäss Fig. 1 zwei in Abstand zueinander stehende Profilwände 14, 16 auf, die durch Querwände 18, 20 zu einem kastenförmigen Hohlprofil ergänzt sind. In Einbaulage entspricht die vom Fahrzeug wegweisende Profilwand 14 dem einen Stoss aufnehmenden Aussengurt bzw. Druckgurt, die gegen das Fahrzeug gerichtete Profilwand 16 dem Innengurt bzw. Zuggurt.

Mittig zwischen den beiden Querwänden 18, 20 ist ein die Profilwände 12, 14 verbindender Quersteg 22 angeordnet, der das kastenförmige Hohlprofil der Stossstange 12 in zwei Kammern 24, 26 unterteilt. Diese Kammern bilden Verformungsteile, die bei Einwirkung einer frontalen Kraft P auf die Stossstange 10 verformt werden und damit einen ersten Teil der Aufprallenergie vernichten.

Bei dem in den Fig. 1 bis 5 dargestellten Deformationselement 10 handelt es sich um das vom Fahrzeug aus in Fahrzeuglängsrichtung x am rechtsseitigen Fahrzeuglängsträger montierte Element. Das Deformationselement auf der linken Fahrzeugseite ist entsprechend spiegelbildlich konzipiert.

Das Deformationselement 10 weist zwei erste Seitenwände 28, 30 auf, die an ihrem der Stossstange 12 entfernten Ende unter Bildung eines Flansches 32, 34 nach aussen umgebogen sind. Diese Flansche dienen zum Festschrauben des Deformationselementes 10 an einem Fahrzeuglängsträger, wobei in Einbaulage des Deformationselementes der Flansch 32 in Fahrzeuglängsrichtung x gesehen oben, der Flansch 34 unten angeordnet ist. Das der Stossstange 12 zugewandte Ende der ersten Seitenwände 28, 30 ist als Befestigungslasche 36, 38 ausgebildet.

Die voneinander beabstandeten ersten Seitenwände 28, 30 sind über zwei ebenfalls voneinander beabstandete zweite Seitenwände 40, 42 miteinander verbunden, wobei die ersten und die zweiten Seitenwände 28, 30, 40, 42 in Fahrzeuglängsrichtung x paarweise aufeinander zulaufend geneigt sind. Die zweiten Seitenwände 40, 42 sind an ihrem der Stossstange 12 zugewandten Ende über einen quer zur Fahrzeuglängsrichtung x verlaufenden Steg 44 miteinander verbunden. Die den beiden ersten Seitenwänden 28,30 zugewandten Ränder der zweiten Seitenwände 40, 42 und des Steges 44 sind unter Bildung von Verbindungsstreifen 46 derart nach aussen umgebogen, dass sie über die Verbindungsstreifen 46 den ersten Seitenwänden 28, 30 aufliegen und durch Widerstandsschweissen miteinander verbunden sind. Aus Gründen einer besseren Steifigkeit sind die dem Steg 44 entfernten Enden der Seitenwände 40, 42 doppelt nach aussen umgebogen.

In die ersten Seitenwände 28, 30 sind quer zur Fahrzeuglängsrichtung x und paarweise jeweils auf einer gemeinsamen Ebene E₄₈, E₅₀ liegende erste Sicken 48a, b und 50a, b eingearbeitet. Diese ersten Sicken 48a, b und 50a, b sind über die gesamte Breite der Seitenwände 28, 30 durchgehend ausgebildet.

Die zweiten Seitenwände 40, 42 sind mit zweiten, ebenfalls quer zur Fahrzeuglängsrichtung x verlaufenden und paarweise in einer gemeinsamen zweiten Ebene E₅₂, E₅₄ liegenden zweiten Sicken 52a, b und 54a, b ausgestattet. Diese zweiten Sicken 52a, b und 54a, b erstrecken sich nur über einen mittleren Teil der zweiten Seitenwände 40, 42 und weisen einen Abstand a zu den ersten Seitenwänden 28, 30 auf.

Obschon im vorliegenden Ausführungsbeispiele nur je zwei Sickenpaare bzw. je zwei ersten und zweite Ebenen gezeigt sind, können je nach Ausführungsform und Grösse des Deformationselementes 10 mehr als zwei erste und zweite Ebenen mit ersten und zweiten Sicken angeordnet sein.

In dem in den Fig. 1 bis 5 gezeigten Ausführungsbeispiel für ein Deformationselement 10 ist eine Abschleppeinrichtung 56 vorgesehen. Diese besteht im wesentlichen aus einem Rohrstück 58 mit einem Innengewinde 60 zum lösbaren Einschrauben einer in der Zeichnung nicht dargestellten Abschleppöse. Das Rohrstück 58 ist an seinem dem Innengewinde 60 entfernten Ende mit einem querschnittlich etwa U-förmigen, der inneren Querschnittskontur der zweiten Seitenwände 40, 42 und des diese verbindenden Steges 44 nachgebildeten Einlegeteil 62 verschweisst. Das Rohrstück 58 mit angeschweissten Einlegeteil 62 wird beim Zusammenbau des Deformationselementes 10 von der gegen die Flansche 32, 34 hin offenen Seite des aus den zweiten Seitenwänden 40, 42 und dem Steg 44 gebildeten Mittelteil durch eine entsprechende Öffnung 64 im Steg 44 bis zum Anschlag hindurch geschoben und in dieser Stellung durch seitliche in den zweiten Seitenwänden 40, 42 angeordnete Schlitze 56, 58 hindurch zur Fixierung an den Steg 44 angeschweisst. Da im Falle eines Abschleppens die Zugkräfte vor allem über die ersten Seitenwände auf den Fahrzeuglängsträger übertragen werden, sind die durch die Abwinklung der Flansche 32, 34 von den ersten Seitenwänden 28, 30 gebildeten Kanten mit quer zu diesen verlaufenden Versteifungssicken 72 ausgebildet.

Das in den Fig. 1 bis 5 gezeigte dreiteilige Ausführungsbeispiel eines Deformationselementes 10 ist aus Stahlblech geformt. Die einzelnen Teile, d.h. die beiden ersten Seitenwände 28,30 und das aus den beiden zweiten Seitenwänden 40, 42 und dem Steg 44 gebildete Mittelteil werden nach dem Stanzen und Biegen in die entsprechende Form durch Widerstandsschweissen miteinander zum Deformationselement 10 verbunden.

## Patentansprüche

1. Fahrzeug mit an diesem über wenigstens ein Deformationselement (10) quer zur Fahrzeuglängsrichtung (x) festgelegter Stossstange (12), wobei das Deformationselement (10) zwei voneinander beabstandete erste Seitenwände (28,30) aufweist, die über zwei voneinander beabstandete zweite Seitenwände (40,42) miteinander verbunden sind, und wobei die ersten und zweiten Seitenwände (28,30;40,42) quer zur Fahrzeuglängsachse (x) verlaufende, paarweise einander gegenüber stehende, je in einer gemeinsamen Ebene liegende erste und zweite Sicken (48a,b, 50a,b; 52a,b, 54a,b) aufweisen,
**dadurch gekennzeichnet, dass**
sich die ersten Sicken (48a,b, 50a,b) über die gesamt Breite der ersten Seitenwände (28,30) und die zweiten Sicken (52a,b, 54a,b) unter Freilassen eines beidseitigen Randabstandes (a) nur über einen mittleren Teil der zweiten Seitenwände (40,42) erstrecken, wobei die ersten Sicken (48a,b, 50a,b) paarweise in ersten Ebenen (E₄₈, E₅₀) und die zweiten Sicken (52a,b, 54a,b) paarweise in zwischen jeweils zwei aufeinanderfolgenden ersten Ebenen liegenden zweiten Ebenen (E₅₂,E₅₄) angeordnet sind.

2. Fahrzeug nach Anspruch 1, **dadurch gekennzeichnet, dass** die ersten und/oder die zweiten Seitenwände (28,30;40,42) in Fahrzeuglängsrichtung (x) paarweise aufeinander zulaufend geneigt sind.

3. Fahrzeug nach Anspruch 1 oder 2, **dadurch gekennzeichnet, dass** die zweiten Seitenwände (40,42) an ihrem der Stossstange (12) zugewandten Ende über einen quer zur Fahrzeuglängsrichtung (x) verlaufenden Steg (44) miteinander verbunden sind.

4. Fahrzeug nach Anspruch 3, **dadurch gekennzeichnet, dass** der Steg (44) eine Öffnung (64) aufweist und ein an einem den zweiten Seitenwänden (40,42) und dem Steg (44) innenseitig anliegenden und an den zweiten Seitenwänden (40,42) und/oder am Steg (44) fixierten Einlegeteil (62) festgelegtes, mit einem Innengewinde (60) zum lösbaren Einschrauben einer Abschleppöse versehenes Rohrstück (58) die Öffnung (64) durchsetzt.

5. Fahrzeug nach einem der Ansprüche 1 bis 4, **dadurch gekennzeichnet, dass** die ersten und/oder die zweiten Seitenwände (28,30;40,42) an ihren der Stossstange (12) entfernten Enden als Flansche (32,34) zur Bildung einer integralen Befestigungsplatte unter Bildung einer Kante (70) nach aussen abgewinkelt sind.

6. Fahrzeug nach Anspruch 5, **dadurch gekennzeichnet, dass** quer zu den durch die Abwinklung gebildeten Kanten (70) Versteifungssicken (72) verlaufen.

7. Fahrzeug nach einem der Ansprüche 1 bis 6, **dadurch gekennzeichnet, dass** die zweiten Seitenwände (40,42) über abgewinkelte Verbindungsstreifen (46) den ersten Seitenwänden (28,30) innenseitig anliegen und mit diesen über die Verbindungsstreifen (46) verbunden sind.

8. Fahrzeug nach einem der Ansprüche 1 bis 7, **dadurch gekennzeichnet, dass** die ersten Seitenwände (28,30) an ihrem der Stossstange (12) zugewandten Ende Befestigungslaschen (36) für die Befestigung der Stossstange (12) anbieten.

9. Fahrzeug nach einem der Ansprüche 1 bis 8, **dadurch gekennzeichnet, dass** wenigstens ein Paar der in dem der Stossstange (12) entfernt liegenden Bereich der ersten Seitenwände (28,30) angeordneten ersten Sicken (48,50) randständig flachgedrückt ist.

10. Fahrzeug nach einem der Ansprüche 1 bis 9, **dadurch gekennzeichnet, dass** das Deformationselement (10) aus Stahlblech gefertigt ist.

11. Fahrzeug nach einem der Ansprüche 1 bis 10, **dadurch gekennzeichnet, dass** die Stossstange (12) ein Profil aus einer Aluminiumlegierung ist.

## Claims

1. Vehicle with a bumper (12) secured thereto transversely to the longitudinal direction (x) of the vehicle by means of at least one deformation element (10), the deformation element (10) having two first side walls (28, 30) arranged at a distance from one another and joined together by means of two second side walls (40, 42) arranged at a distance from one another, and the first and second side walls (28, 30; 40, 42) having first and second beads (48a,b, 50a,b; 52a,b, 54a,b) arranged in pairs opposite one another in one common plane and extending transversely to the longitudinal axis (x) of the vehicle, **characterised in that** the first beads (48a,b, 50a,b) extend over the entire width of the first side walls (28, 30) and the second beads (52a,b, 54a,b) extend over only a central part of the second side walls (40, 42) leaving a free space (a) at both edges, the first beads (48a,b, 50a,b) being arranged in pairs in first planes (E₄₈, E₅₀) and the second beads (52a,b, 54a,b) being arranged in pairs in second planes (E₅₂, E₅₄) situated between two successive first planes.

2. Vehicle according to claim 1, **characterised in that** the first and/or the second side walls (28, 30; 40, 42) are inclined towards one another in pairs in the longitudinal direction (x) of the vehicle.

3. Vehicle according to claim 1 or claim 2, **characterised in that** the second side walls (40, 42) are joined together at their ends directed towards the bumper (12) by means of a web (44) extending transversely to the longitudinal direction (x) of the vehicle.

4. Vehicle according to claim 3, **characterised in that** the web (44) has an opening (64) and a tube section (58) secured to an insert part (62) which bears against the inner faces of the second side walls (40, 42) and the web (44) and is fixed to the second side walls (40, 42) and/or to the web (44) and provided with an internal thread (60) for releasably screwing in a towing lug traverses the opening (64).

5. Vehicle according to one of claims 1 to 4, **characterised in that** the first and/or the second side walls (28, 30; 40, 42) are bent outwards at their ends remote from the bumper (12) in the form of flanges (32, 34) in order to form an integral mounting plate with the formation of an edge (70).

6. Vehicle according to claim 5, **characterised in that** reinforcing beads (72) extend transversely to the edges (70) formed by the bend.

7. Vehicle according to one of claims 1 to 6, **characterised in that** the second side walls (40, 42) bear by means of bent connecting strips (46) against the inner faces of the first side walls (28, 30) and are joined thereto by means of the connecting strips (46).

8. Vehicle according to one of claims 1 to 7, **characterised in that** the first side walls (28, 30) provide mounting brackets (36) for mounting the bumper (12) at their ends directed towards the bumper (12).

9. Vehicle according to one of claims 1 to 8, **characterised in that** at least one pair of the first beads (48, 50) arranged in the region of the first side walls (28, 30) remote from the bumper (12) are flattened at their edges.

10. Vehicle according to one of claims 1 to 9, **characterised in that** the deformation element (10) is made of sheet steel.

11. Vehicle according to one of claims 1 to 10, **characterised in that** the bumper (12) is a section made of an aluminium alloy.

## Revendications

1. Véhicule sur lequel est fixé transversalement à la direction longitudinale de véhicule (x), par l'intermédiaire d'au moins un élément de déformation (10), un pare-choc (12), l'élément de déformation (10) présentant deux premières parois latérales (28, 30) mutuellement espacées, qui sont reliées l'une à l'autre par l'intermédiaire de deux deuxièmes parois latérales (40, 42) mutuellement espacées, et les premières et deuxièmes parois latérales (28, 30 ; 40, 42) présentant des premières et des deuxièmes moulures (48a,b, 50a,b ;52a,b, 54a,b) qui s'étendent transversalement à la direction longitudinale de véhicule (x), sont opposées par paires, et respectivement situées dans un plan commun,
**caractérisé en ce que** les premières moulures (48a,b, 50a,b) s'étendent sur la totalité de la largeur des premières parois latérales (28, 30), et les deuxièmes moulures (52a,b, 54a,b) sur uniquement une partie centrale des deuxièmes parois latérales (40, 42) en laissant libre une distance d'espacement de bordure (a) des deux côtés, les premières moulures (48a,b, 50a,b) étant agencées par paires dans des premiers plans (E₄₈, E₅₀), et les deuxièmes moulures (52a,b, 54a,b) étant agencées par paires dans des deuxièmes plans (E₅₂, E₅₄) situés entre respectivement deux premiers plans successifs.

2. Véhicule selon la revendication 1, **caractérisé en ce que** les premières et/ou les deuxièmes parois latérales (28, 30 ; 40, 42) sont inclinées par paires l'une vers l'autre dans la direction longitudinale de véhicule (x).

3. Véhicule selon la revendication 1 ou 2, **caractérisé en ce que** les deuxièmes parois latérales (40, 42) sont reliées l'une à l'autre, au niveau de leur extrémité dirigée vers le pare-choc (12), par l'intermédiaire d'une nervure (44) s'étendant transversalement à la direction longitudinale de véhicule (x).

4. Véhicule selon la revendication 3, **caractérisé en ce que** la nervure (44) présente une ouverture (64), cette ouverture (64) étant traversée par un tronçon de tube (58) qui est pourvu d'un filetage intérieur (60) pour le vissage démontable d'un anneau de remorquage, et est fixé sur une pièce d'insert (62) s'appuyant intérieurement sur les deuxièmes parois latérales (40, 42) et sur la nervure (44), et fixée sur les deuxièmes parois latérales (40, 42) et/ou sur la nervure (44).

5. Véhicule selon l'une des revendications 1 à 4, **caractérisé en ce que** les premières et/ou les deuxièmes parois latérales (28, 30 ; 40, 42) sont coudées vers l'extérieur, au niveau de leurs extrémités éloignées du pare-choc (12), sous la forme de flasques (32, 34), en formant une arête (70), en vue de réaliser une plaque de fixation intégrale.

6. Véhicule selon la revendication 5, **caractérisé en ce que** des moulures de renfort (72) s'étendent transversalement aux arêtes (70) formées par le pliage.

7. Véhicule selon l'une des revendications 1 à 6, **caractérisé en ce que** les deuxièmes parois latérales (40, 42) s'appuient, par l'intermédiaire de pattes de liaison (46) coudées, sur le côté intérieur des premières parois latérales (28, 30), et sont reliées ou assemblées à celles-ci par les pattes de liaison (46).

8. Véhicule selon l'une des revendications 1 à 7, **caractérisé en ce que** les premières parois latérales (28, 30) présentent à leur extrémité dirigée vers le pare-choc (12), des pattes de fixation (36) pour la fixation du pare-choc (12).

9. Véhicule selon l'une des revendications 1 à 8, **caractérisé en ce qu'**au moins une paire des premières moulures (48, 50) agencées dans la zone des premières parois latérales (28, 30), qui est éloignée du pare-choc (12), sont écrasées à plat au niveau du bord.

10. Véhicule selon l'une des revendications 1 à 9, **caractérisé en ce que** l'élément de déformation (10) est fabriqué en tôle d'acier.

11. Véhicule selon l'une des revendications 1 à 10, **caractérisé en ce que** le pare-choc (12) est un profilé en un alliage d'aluminium.
